# EUROPEAN PATENT SPECIFICATION

(11) **EP 2 738 755 B1**
(45) Date of publication and mention of the grant of the patent: **26.12.2018**
(21) Application number: 12194588.5
(22) Date of filing: 28.11.2012
(51) Int. Cl.: G09B 21/00

(54) **Device for tactual presentation of information**
Vorrichtung für tastbare Informationsdarstellung
Dispositif de présentation tactile d'informations

(43) Date of publication of application: 04.06.2014
(73) Proprietor: Hochschule für angewandte Wissenschaften Fachhochschule Coburg, 96450 Coburg (DE)
(72) Inventor: Lindner, Gerhard, 96450 Coburg (DE); Gardner, John A., Corvallis, OR 97333 (US)
(74) Representative: Maikowski & Ninnemann Patentanwälte Partnerschaft mbB

(56) References cited:
- WO-A2-2005/089176
- FR-A1- 2 889 514
- FR-A1- 2 955 404
- US-A1- 2003 117 371
- C. BOLZMACHER ET AL: "Tactile refreshable screen based on magneto-rheological fluids for map exploration and navigation tasks", PROCEEDINGS OF SPIE, vol. 8066, 4 May 2011 (2011-05-04), page 80661T, XP055058317, ISSN: 0277-786X, DOI: 10.1117/12.886982
- VIDAL-VERDU F ET AL: "Graphical Tactile Displays for Visually-Impaired People", IEEE TRANSACTIONS ON NEURAL SYSTEMS AND REHABILITATIONENGINEERING, IEEE SERVICE CENTER, NEW YORK, NY, US, vol. 15Describes many of the atl, no. 1, 1 March 2007 (2007-03-01), pages 119-130, XP011184211, ISSN: 1534-4320, DOI: 10.1109/TNSRE.2007.891375
- CHOUVARDAS V G ET AL: "Tactile displays: Overview and recent advances", DISPLAYS DEVICES, DEMPA PUBLICATIONS, TOKYO, JP, vol. 29, no. 3, 1 July 2008 (2008-07-01), pages 185-194, XP022603077, ISSN: 0141-9382, DOI: 10.1016/J.DISPLA.2007.07.003 [retrieved on 2008-04-03]
- Limu Wang ET AL: "Electrorheological Fluid and Its Applications in Microfluidics" In: "TOPICS IN CURRENT CHEMISTRY.", 1 January 2011 (2011-01-01), SPRINGER, BERLIN., DE, XP055341311, ISSN: 0340-1022 vol. 304, pages 91-115, DOI: 10.1007/128_2011_148,

## Description

The invention relates
to a device for tactual presentation of information according to claim 1.
Devices that generate tactually detectable surface modifications for communicating information are known from the prior art. For example, refreshable Braille displays have been developed, these displays comprising electro-mechanical arrangements configured to display Braille characters. These electro-mechanical arrangements comprise a matrix of movable pins actuated by, for example, piezoelectric units as disclosed, for example, in US 6,700,553. Further, it is known to generate warning signals for a driver of a motor vehicle by creating tactually perceivable vibrations of the steering wheel.
The article C. BOLZMACHER ET AL: "Tactile refreshable screen based on magneto-rheological fluids for map exploration and navigation tasks", PROCEEDINGS OF SPIE, vol. 8066, 4 May 2011 (2011-05-04), page 80661 T discloses a tactile screen having an array of actuators which can display various patterns, wherein the actuation technology is based on a magneto-rheological fluid which is injected in a chamber with an elastomeric membrane using a micro pump.
Moreover, FR 2 871 270 A1 describes a tactile display using spiral elements for creating a tactile pattern.

Further, US 2003/117371 A1 discloses a scanning tactile graphic display apparatus having stimulus points embedded in a matrix. FR 2 889 514 A1 relates to using electro wetting for creating a tactile display.

The object of the invention is to provide a device for tactual presentation of information that be reliably operated and fabricated in a cost efficient way.

According to the invention, a device for tactual presentation of information is provided, comprising
- a liquid;
- a tactile layer arranged adjacent the liquid;
- an arrangement for selectively deforming a surface of the liquid, wherein
   - the tactile layer is arranged in such a way that a deformation of the liquidsurface causes a deformation of the tactile layer such that by selectively deforming the surface of the liquid a tactual presentation of information can be generated in the tactile layer, wherein
   - the arrangement for deforming the surface of the liquid comprises at least one transmitter for generating acoustic waves in the liquid which travel towards the surface of the liquid, thereby causing the deformation of the surface, wherein
   - the liquid is a magneto- or electrorheological liquid, wherein the arrangement for deforming the surface of the liquid comprises a device for generating a magnetic or electric field interacting with the magneto- or electrorheological liquid in such a way that it stabilizes the deformation of the liquid surface created by the acoustic waves (AW).

The acoustic waves in the liquid, respectively, evoke a deformation of the liquid surface adjacent the tactile layer such that the haptic properties of the tactile layer are modified. The deformation of the tactile layer may be reversible such that by generating the acoustic waves in a region or in a plurality of different regions of the liquid, the liquid surface can be lifted and lowered such that the tactually detectable deformation of the tactile layer can be removed and replaced by another deformation pattern. It is noted that a tactually detectable deformation (e.g. a deformation of at least 100 µm), in particular, will be generated (e.g. due to non-linear effects) if high frequency acoustic waves (of e.g. at least 1 MHz) are excited in the liquid.

It is noted that the liquid may be arranged in the form of a continuous layer. However, it is also possible that the liquid is arranged in the form of a plurality of liquid regions (e.g. drops) positioned with a distance from one another.

For example, the transmitter is arranged at a substrate positioned adjacent the liquid, wherein the substrate may be in contact with the liquid. In particular, the transmitter is a piezo-electric transducer (e.g. an interdigital transducer), i.e. a transducer that comprises a piezoelectric unit. The substrate may be a glass or a metal substrate.

According to another embodiment of the invention, the tactile layer completely encloses the liquid. Thus, the tactile layer forms a volume filled with the liquid, wherein a portion of the tactile layer which is accessible from the outside can be selectively deformed by deforming the liquid. For example, the tactile layer consists of a flexible material (e.g. an elastically deformable material) such that a deformation of the liquid surface is efficiently transferred to the tactile layer. For example, the tactile layer is formed as a foil, which, for example has a thickness of not more than 500 µm. In particular, the foil may be easily deformable but may possess a certain stability to sustain a certain pressure exerted on the foil when a user touches the deformations created in the foil. Further, the foil may exert a counterforce on the deformed liquid, wherein the counterforce, for example, prevents atomisation of the liquid when generating acoustic waves therein. For example, an elastomeric foil, e.g. a biaxially oriented polyethylene terephthalate foil ("Mylar" foil), can be used.

The deformation of the surface of the liquid is created by acoustic waves in the magneto- or electrorheological liquid excited via a transmitter as already set forth above. The magnetic or electric field is used to stabilize the deformation of the liquid and thus of the tactile layer such that the deformation of the tactile layer can be felt without considerably modifying the surface deformation thereby. That is, the magnetic or electric field may create a certain counterforce against the pressure on the deformation of the tactile layer when a user touches the tactile layer.

For example, the device for generating a magnetic or electric field comprises a ring coil or cylindrical coil, wherein the transmitter may be arranged within the coil. It is also conceivable that the device for generating a magnetic field comprises a coil (e.g. a flat coil) arranged between a first and a second transmitter. For generating an electric field, the device may comprise a capacitor.

Further, the liquid may be arranged in a container, wherein, for example, the transmitter is arranged on an outer side of the container, the outer side facing away from an inner volume (in which the liquid is arranged) of the container.

Further more, the container may comprise a hollow cylindrical section at which the transmitter and/or a component (e.g. a coil) of the device for generating a magnetic field may be arranged.

In particular, the arrangement for deforming the surface of the liquid is configured to generate a plurality of localized deformations of the liquid surface, wherein the generated deformations are located with a distance from one another. Further, the deformations may be spot-like and may be arranged in a (e.g. regular) pattern. For example, the arrangement for deforming the surface of the liquid is configured to generate deformations of the liquid surface in the form of Braille characters. Thus, the device according to the invention may be used to realize a Braille display, wherein the Braille characters are generated by deforming the liquid adjacent (e.g. below) the tactual layer. According to an embodiment of the invention, the device comprises a container (as mentioned above) having a plurality of hollow cylindrical sections for creating a plurality of deformations.

However, it is noted that the invention is not limited to Braille displays. Rather, the invention can be used for creating tactual information in other devices such as a PC mouse, wherein the tactile layer may be a surface of the PC mouse such tactual information can be communicated to a PC user.

Further, the device according to the invention may be part of a steering wheel, wherein the steering wheel is deformed at predetermined regions ("tactile pixels") in order to convey information to a vehicle driver. Also, other information conveying units of a vehicle could be equipped with the device according to the invention. For example, buttons or other switching areas (e.g. a touchscreen in the centre console of the vehicle) could be replaced by or furnished with the device according to the invention.

The embodiments of the invention will be described in more detail hereinafter with reference to the Drawings, in which:
- Fig. 1: illustrates a device for tactual presentation of information according to a first embodiment of the invention;
- Fig. 2: illustrates a device according to a second embodiment of the invention;
- Fig. 3: depicts a device according to a third embodiment of the invention; and
- Fig. 4: illustrates a device according to a fourth embodiment of the invention.

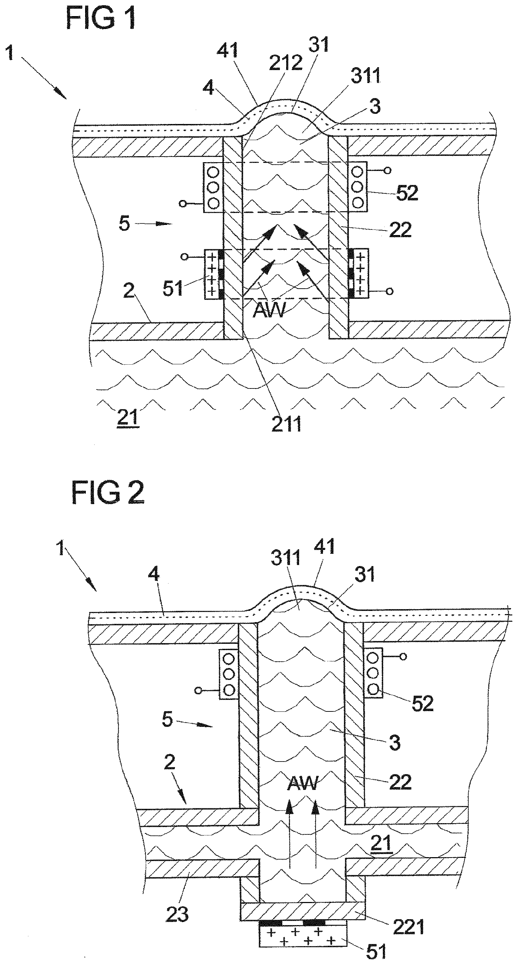

Figure 1 shows a device 1 for tactual presentation of information. The device 1 comprises a container 2 in which a magnetorheological liquid 3 is arranged. Instead of a magnetorheological liquid an electrorheological liquid could be used. The container 2 comprises a first section serving as a liquid reservoir 21 and a hollow cylindrical section 22 connected to the liquid reservoir 21 via a first opening 211. Further, the hollow cylindrical section 22 comprises a second opening 212, wherein the second opening 212 is covered by a tactile layer in the form of an elastomeric foil 4 such that the elastomeric foil 4 is in contact with the liquid in the hollow cylindrical section 22 or can be brought into contact with liquid 3.

Further, device 1 comprises an arrangement 5 for selectively deforming a surface 31 of magnetorheological liquid 3, the surface 31 facing towards the elastomeric foil 4. Thus, by deforming the surface 31 of liquid 3 the elastomeric foil 4 will also be deformed such that by selectively deforming a portion of surface 31 of liquid 3 a tactual presentation of information is generated in the elastomeric foil 4. Using device 1 according to the invention a tactile display thus can be generated.

The arrangement 5 for deforming the surface 31 of liquid 3 comprises a transmitter in the form of a piezoelectric transducer 51, wherein the transducer 51 is arranged on an outer surface of the hollow cylindrical section 22 of container 2, i.e. on a side of the hollow cylindrical portion 22 that faces away from the magnetorheological liquid 3.

The arrangement 5 for deforming the surface 31 of liquid 3 further comprises a device in the form of a coil 52 (e.g. a ring coil or a cylindrical coil) for generating a magnetic field interacting with magnetorheological liquid 3, the coil 52 being arranged between the transducer 51 and the elastomeric foil 4. The magnetic field produced by coil 52 is used to stabilize the magnetorheological liquid 3 after the deformation of its surface 31. That is, surface 31 of liquid 3 is deformed by exciting acoustic waves AW in the portion of liquid 3 that is located in the hollow cylindrical section 22 of container 2, the excited acoustic waves AW propagating towards surface 31 (i.e. towards the elastomeric foil 4) and generating an acoustic pressure in the liquid such that a bulge 311 is formed in the surface 31 of liquid 3. Accordingly, a bulge 41 is formed in the elastomeric foil 4, wherein the bulge 41 can be felt by a user of device 1.

The magnetic field generated by coil 52 interacts with the magnetorheological liquid 3 in such a way that a counterforce is created in liquid 3 working against a pressure on bulge 41 (and thus on bulge 311 of liquid 3) when a user touches the elastomeric foil 4. The bulges 311, 41 can be eliminated by switching off coil 52 and transducer 51.

Figure 2 illustrates a modification of Figure 1, wherein the piezoelectric transducer 51 is not arranged at the hollow cylindrical section 22 of container 2. Rather, the liquid reservoir 21 is delimited by a lower sidewall 23 (such as a plate), wherein the transducer 51 is arranged on a lower side (facing away from liquid 3) of the lower sidewall 23. In particular, transducer 51 is arranged on a recess 221 of the lower sidewall 23 in such a way that it is located on the axis of the hollow cylindrical section 22 of container 2. Of course, an additional transducer could be arranged on the hollow cylindrical section 22 as illustrated in Figure 1.

Further, similarly to Figure 1, a coil 52 for generating a magnetic filed across liquid 3 is arranged in proximity of elastomeric foil 41, i.e. in the upper half of the hollow cylindrical section 22 of container 2.

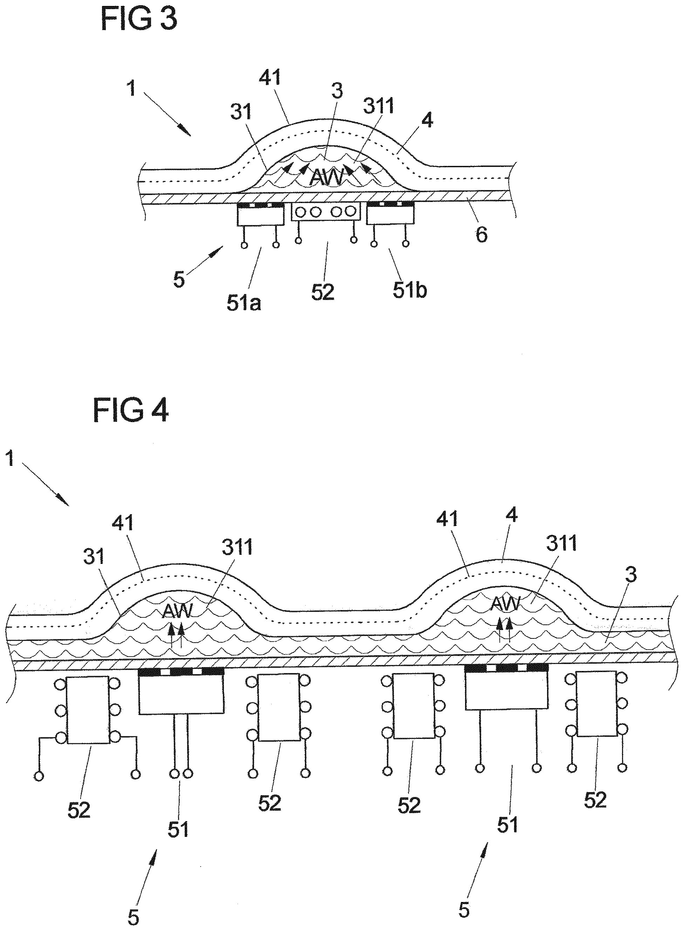

Another embodiment of the invention is illustrated in Figure 3. According to this embodiment, the magnetorheological liquid 3 is arranged between a substrate 6 and an elastomeric foil 4. Further, device 1 comprises an arrangement 5 for selectively deforming a surface 31 of liquid 3, the arrangement 5 comprising a first and a second piezoelectric transducer 51a, 51b arranged on an outer side (facing away from liquid 3) of substrate 6. The transducers 51a, 51b are used to generate acoustic waves AW in liquid 3 which travel towards surface 31 and elastomeric foil 4 such that a bulge 31, 41 is generated in surface 31 and elastomeric foil 4, respectively.

For stabilizing bulge 311 a flat coil 4 is arranged on the outer side of substrate 6 between the two transducers 51a, 51b.

It is noted that, of course, the device according to the invention can comprise a plurality of arrangements (as for example shown in Figures 1 to 3) for selectively deforming the liquid such that a plurality of deformations (bulges) can be generated in the elastomeric foil 4; e.g. in order to create tactile "pixels". For example, a plurality of arrangements 5 shown in Figure 3 could be arranged on substrate 6.

The embodiment shown in Figure 4 comprises a plurality of arrangements 5 for deforming the liquid 3. Different from the embodiment of Figure 3 the arrangements 5 each comprise a single transducer 51 for creating bulges 311, only, wherein the transducer 51 is arranged in a cylindrical coil 52 of the arrangement 5.

It is of course also conceivable that elements of the embodiments shown in Figures 1 to 4 are used in combination. For example, a device according to the invention could be equipped with flat coils as illustrated in Figure 3 and with cylindrical coils as illustrated in Figure 4.

### Reference signs

- 1: device for tactual presentation of information
- 2: container
- 3: magnetorheological liquid
- 4: elastomeric foil
- 5: arrangement
- 6: substrate
- 21: liquid reservoir
- 22: hollow cylindrical section
- 23: lower sidewall
- 31: surface
- 41: bulge
- 51, 51a, 51b: piezoelectric transducer
- 52: coil
- 211: first opening
- 212: second opening
- 311: bulge

## Claims

1. A device for tactual presentation of information, comprising:
- a liquid (3);
- a tactile layer (4) arranged adjacent the liquid (3);
- an arrangement (5) for selectively deforming a surface (31) of the liquid (3), wherein
- the tactile layer (4) is arranged in such a way that a deformation (311) of the liquid (3) surface causes a deformation (41) of the tactile layer (4) such that by selectively deforming the surface (31) of the liquid (3) a tactual presentation of information can be generated in the tactile layer (4), wherein
- the arrangement (5) for deforming the surface (31) of the liquid (3) comprises at least one transmitter (51, 51a, 51b) for generating acoustic waves (AW) in the liquid (3) which travel towards the surface (31) of the liquid (3), thereby causing the deformation (311) of the surface (31).
**characterized in that**
the liquid (3) is a magneto- or electrorheological liquid, wherein the arrangement (5) for deforming the surface (31) of the liquid (3) comprises a device for generating a magnetic or electric field interacting with the magneto- or electrorheological liquid in such a way that it stabilizes the deformation (311) of the liquid (3) surface (31) created by the acoustic waves (AW).

2. The device as claimed in claim 1, wherein the transmitter (51, 51a, 51b) is arranged at a substrate (6) positioned adjacent the liquid (3).

3. The device as claimed in one of the preceding claims, wherein the transmitter (51, 51a, 51b) is a piezo-electric transducer.

4. The device as claimed in one of the preceding claims, wherein the tactile layer (4) completely encloses the liquid (3).

5. The device as claimed in one of the preceding claims, wherein the tactile layer (4) consists of a flexible material, in particular of an elastically deformable material.

6. The device as claimed in one of the preceding claims, wherein the tactile layer (4) is a foil.

7. The device as claimed in one of the preceding claims, wherein the device for generating a magnetic or electric field comprises a coil (52) for generating a magnetic field and wherein the transmitter (51, 51a, 51b) is arranged within the coil (52).

8. The device as claimed in one of the preceding claims as far as claimed in claim 2, wherein the device for generating a magnetic or electric field comprises a coil (52) arranged between a first and a second transmitter (51a, 51b).

9. The device as claimed in one of the preceding claims, wherein the liquid (3) is arranged in a container (2) and the transmitter (51) is arranged on an outer side of the container (2).

10. The device as claimed in claim 9, wherein the container comprises a hollow cylindrical section (22) at which the transmitter (51) is arranged.

11. The device as claimed in one of the preceding claims, wherein the arrangement (5) for deforming the surface (31) of the liquid (3) is configured to generate a plurality of deformations (311) of the liquid surface (31), the deformations (311) being located with a distance from one another.

12. The device as claimed in one of the preceding claims, wherein the arrangement (5) for deforming the surface (31) of the liquid (3) is configured to generate deformations (311) of the liquid (3) surface in the form of Braille characters.

## Patentansprüche

1. Vorrichtung zur taktilen Informationsdarstellung, umfassend:
- eine Flüssigkeit (3);
- eine taktile Schicht (4), an die Flüssigkeit (3) angrenzend angeordnet;
- eine Anordnung (5) zum selektiven Deformieren einer Oberfläche (31) der Flüssigkeit (3), wobei
- die taktile Schicht (4) derart angeordnet ist, dass eine Deformation (311) der Oberfläche der Flüssigkeit (3) eine Deformation (41) der taktilen Schicht (4) verursacht, so dass durch selektives Deformieren der Oberfläche (31) der Flüssigkeit (3) eine taktile Informationsdarstellung in der taktilen Schicht (4) erzeugt werden kann, wobei
- die Anordnung (5) zum Deformieren der Oberfläche (31) der Flüssigkeit (3) mindestens einen Sender (51, 51a, 51b) zum Erzeugen von akustischen Wellen (AW) in der Flüssigkeit (3), welche sich zur Oberfläche (31) der Flüssigkeit (3) fortbewegen, wodurch die Deformation (311) der Oberfläche (31) verursacht wird, umfasst,
**dadurch gekennzeichnet, dass**
die Flüssigkeit (3) eine magneto- oder elektrorheologische Flüssigkeit ist, wobei die Anordnung (5) zum Deformieren der Oberfläche (31) der Flüssigkeit (3) eine Vorrichtung zum Erzeugen eines magnetischen oder elektrischen Felds umfasst, die mit der magneto- oder elektrorheologischen Flüssigkeit derart wechselwirkt, dass sie die durch die akustischen Wellen (AW) geschaffene Deformation (311) der Oberfläche (31) der Flüssigkeit (3) stabilisiert.

2. Vorrichtung nach Anspruch 1, wobei der Sender (51, 51a, 51b) an einem an die Flüssigkeit (3) angrenzenden Substrat (6) angeordnet ist.

3. Vorrichtung nach einem der vorhergehenden Ansprüche, wobei der Sender (51, 51a, 51b) ein piezoelektrischer Wandler ist.

4. Vorrichtung nach einem der vorhergehenden Ansprüche, wobei die taktile Schicht (4) die Flüssigkeit (3) vollständig umschließt.

5. Vorrichtung nach einem der vorhergehenden Ansprüche, wobei die taktile Schicht (4) aus einem flexiblen Material besteht, insbesondere einem elastisch deformierbaren Material.

6. Vorrichtung nach einem der vorhergehenden Ansprüche, wobei die taktile Schicht (4) eine Folie ist.

7. Vorrichtung nach einem der vorhergehenden Ansprüche, wobei die Vorrichtung zum Erzeugen eines magnetischen oder elektrischen Felds eine Spule (52) zum Erzeugen eines Magnetfelds umfasst und wobei der Sender (51, 51a, 51b) innerhalb der Spule (52) angeordnet ist.

8. Vorrichtung nach einem der vorhergehenden Ansprüche soweit in Anspruch 2 beansprucht, wobei die Vorrichtung zum Erzeugen eines magnetischen oder elektrischen Felds eine Spule (52) umfasst, die zwischen einem ersten und einem zweiten Sender (51a, 51b) angeordnet ist.

9. Vorrichtung nach einem der vorhergehenden Ansprüche, wobei die Flüssigkeit (3) in einem Behälter (2) angeordnet ist und der Sender (51) an einer Außenseite des Behälters (2) angeordnet ist.

10. Vorrichtung nach Anspruch 9, wobei der Behälter eine hohlzylindrische Sektion (22) umfasst, an welcher der Sender (51) angeordnet ist.

11. Vorrichtung nach einem der vorhergehenden Ansprüche, wobei die Anordnung (5) zum Deformieren der Oberfläche (31) der Flüssigkeit (3) ausgelegt ist zum Erzeugen einer Vielzahl von Deformationen (311) der Flüssigkeitsoberfläche (31), wobei die Deformationen (311) untereinander einen Abstand aufweisen.

12. Vorrichtung nach einem der vorhergehenden Ansprüche, wobei die Anordnung (5) zum Deformieren der Oberfläche (31) der Flüssigkeit (3) ausgelegt ist zum Erzeugen von Deformationen (311) der Oberfläche der Flüssigkeit (3) in der Form von Braille-Zeichen.

## Revendications

1. Dispositif pour une présentation tactile d'informations, comprenant :
- un liquide (3) ;
- une couche tactile (4) disposée adjacente au liquide (3) ;
- un agencement (5) pour déformer de manière sélective une surface (31) du liquide (3), dans lequel
- la couche tactile (4) est disposée de telle manière qu'une déformation (311) du la surface du liquide (3) provoque une déformation (41) de la couche tactile (4) de telle sorte qu'en déformant de manière sélective la surface (31) du liquide (3), une présentation tactile d'information puisse être générée dans la couche tactile (4), dans lequel
- l'agencement (5) pour déformer la surface (31) du liquide (3) comprend au moins un émetteur (51, 51a, 51b) pour générer des ondes acoustiques (AW) dans le liquide (3) qui se déplacent vers la surface (31) du liquide (3), ce qui provoque la déformation (311) de la surface (31),
**caractérisé en ce que**
le liquide (3) est un liquide magnétorhéologique ou électrorhéologique, dans lequel l'agencement (5) pour déformer la surface (31) du liquide (3) comprend un dispositif pour générer un champ magnétique ou électrique qui interagit avec le liquide magnétorhéologique ou électrorhéologique de telle manière qu'il stabilise la déformation (311) de la surface du liquide (3) créée par les ondes acoustiques (AW).

2. Dispositif selon la revendication 1, dans lequel l'émetteur (51, 51a, 51b) est disposé au niveau d'un substrat (6) positionné adjacent au liquide (3).

3. Dispositif selon l'une des revendications précédentes, dans lequel l'émetteur (51, 51a, 51b) est un transducteur piézoélectrique.

4. Dispositif selon l'une des revendications précédentes, dans lequel la couche tactile (4) entoure complètement le liquide (3).

5. Dispositif selon l'une des revendications précédentes, dans lequel la couche tactile (4) se compose d'un matériau flexible, en particulier d'un matériau élastiquement déformable.

6. Dispositif selon l'une des revendications précédentes, dans lequel la couche tactile (4) est une feuille.

7. Dispositif selon l'une des revendications précédentes, dans lequel le dispositif pour générer un champ magnétique ou électrique comprend une bobine (52) pour générer un champ magnétique et dans lequel l'émetteur (51, 51a, 51b) est disposé à l'intérieur de la bobine (52).

8. Dispositif selon l'une des revendications précédentes autant que possible selon la revendication 2, dans lequel le dispositif pour générer un champ magnétique ou électrique comprend une bobine (52) disposée entre un premier et un second émetteur (51a, 51b).

9. Dispositif selon l'une des revendications précédentes, dans lequel le liquide (3) est disposé dans un récipient (2) et l'émetteur (51) est disposé sur un côté externe du récipient (2).

10. Dispositif selon la revendication 9, dans lequel le récipient comprend une section cylindrique creuse (22) au niveau de laquelle l'émetteur (51) est disposé.

11. Dispositif selon l'une des revendications précédentes, dans lequel l'agencement (5) pour déformer la surface (31) du liquide (3) est configuré pour générer une pluralité de déformations (311) de la surface (31) du liquide, les déformations (311) étant situées à distance les unes des autres.

12. Dispositif selon l'une des revendications précédentes, dans lequel l'agencement (5) pour déformer la surface (31) du liquide (3) est configuré pour générer des déformations (311) de la surface du liquide (3) sous la forme de caractères Braille.
